# EUROPÄISCHE PATENTSCHRIFT

(11) **EP 0 751 331 B1**
(45) Veröffentlichungstag und Bekanntmachung des Hinweises auf die Patenterteilung: **30.08.2000**
(21) Anmeldenummer: 96107138.8
(22) Anmeldetag: 07.05.1996
(51) Int. Cl.: F16L 37/088

(54) **Steckkupplung für Druckmittelsysteme**
Plug coupling for pressure fluid systems
Raccord emboîtable pour systèmes à fluide sous pression

(30) Priorität: 30.06.1995 DE 19523833
(43) Veröffentlichungstag der Anmeldung: 02.01.1997
(73) Patentinhaber: Armaturenfabrik Hermann Voss GmbH + Co., 51688 Wipperfürth (DE)
(72) Erfinder: Goller, Bernd, 51688 Wipperfürth (DE); Prüfer, Joachim, 51371 Leverkusen (DE)
(74) Vertreter: Patentanwälte Dr. Solf & Zapf

(56) Entgegenhaltungen:
- EP-A- 0 226 689
- EP-A- 0 647 803
- WO-A-95/32382
- FR-A- 1 580 195
- FR-A- 2 545 908
- GB-A- 799 155
- US-A- 3 929 357
- US-A- 5 380 049

## Beschreibung

Die vorliegende Erfindung betrifft eine Steckkupplung für Druckmittelsysteme, bestehend aus zwei Kupplungsteilen, und zwar einem Gehäuseteil und einem Steckerteil, wobei das Steckerteil mit einem Steckerschaft über mindestens eine Umfangsdichtung abgedichtet in eine Aufnahmeöffnung des Gehäuseteils einsteckbar und über eine Verriegelungseinrichtung gegen Lösen arretierbar ist, wobei die Verriegelungseinrichtung derart ausgebildet ist, daß eine teilgesteckte Vorraststellung und eine ganz gesteckte Vollraststellung gewährleistet sind, wobei in der Vorraststellung eine derart unvollständige Abdichtung vorliegt, daß im Falle einer Druckbeaufschlagung mit einem Druckmedium ein Signal, insbesondere ein akustisch wahrnehmbares Leckgeräusch erzeugt wird, und wobei in der Vollraststellung eine vollständige, druckdichte Abdichtung vorliegt, wobei die Verriegelungseinrichtung einerseits aus einer radialen Raststufe des einen Kupplungsteils und andererseits aus einem elastisch verformbaren, sowohl in der Vorraststellung als auch in der Vollraststellung mit der Raststufe rastend zusammenwirkenden Halteelement auf der Seite des anderen Kupplungsteils besteht.

Derartige Steckkupplungen werden beispielsweise in Kraftfahrzeug-Bremssystemen, insbesondere bei Lkw-Luftdruckbremsanlagen, eingesetzt. Speziell (aber natürlich nicht nur) bei diesem Anwendungsfall besteht das Problem, daß in machen Fällen, z. B. bei ungünstigen Platzverhältnissen bzw. Einbausituationen, vom Monteur beim Stecken nicht sorgfältig genug auf ein korrektes, vollständiges Stecken geachtet wird, so daß in der Praxis Prüfvorgänge eingeschaltet werden müssen, um zu verhindern, daß bei einer Druckbeaufschlagung, beispielsweise beim Aufbau von Bremsdruck, die Kupplung plötzlich ungewollt getrennt wird.

Bei einer dem Oberbegriff des Anspruchs 1 entsprechenden Steckverbindung, wie sie aus der FR-A-2 545 908 bekannt ist, sind durch ein elastisch verformbares Halteelement eine Vorraststellung sowie eine Vollraststellung gewährleistet, wobei durch eine in der Vorraststellung vorliegende unvollständige Abdichtung das noch nicht korrekte Stecken bemerkt werden kann. Das Halteelement ist dazu als U-förmige Halteklammer ausgebildet, die quer und derart schräg innerhalb der Steckverbindung angeordnet ist, daß der eine U-Schenkel die Vorraststellung definiert, während der andere U-Schenkel in der Vollraststellung mit der Raststufe des Steckers zusammenwirkt. Gelöst wird diese Steckverbindung durch Spreizen der Klammer bzw. der Schenkel mittels länglicher Zapfen, und zwar durch Verdrehen eines äußeren Ringteils.

Aus der EP-B1 0 226 689 ist eine weitere "Kupplungsvorrichtung" bekannt, bei der ebenfalls zur Vermeidung der beschriebenen Probleme schon im noch nicht ganz korrekt gesteckten Zustand der Kupplungsteile eine "Vorrastung" gewährleistet ist, die es verhindert, daß bei Druckbeaufschlagung die Kupplung ganz getrennt wird. Dabei ist in dieser Vorraststellung eine Undichtigkeit derart gewährleistet, daß dieser Zustand akustisch durch ein Leckgeräusch wahrnehmbar ist, ohne daß es zu einem vollständigen, plötzlichen Druckabfall kommen kann. Die Kupplung kann bei Auftreten des Leckgeräusches weiter in die korrekt abgedichtete und arretierte "Vollraststellung" überführt werden. Bei dieser bekannten Kupplungsvorrichtung ist ein aus im Querschnitt kreisförmigem Federdraht gebogener Verriegelungsring nach Art eines Drahtsprengringes vorgesehen, der in einer ersten Ausführungsform in einer Aussparung des Gehäuseteils, dort "Mutterstück" genannt, angeordnet ist und für Vor- und Vollraststellung nacheinander mit zwei separaten, ringnutförmigen Ausnehmungen des Steckerteils, dort "Gegenstück" genannt, zusammenwirkt. In einer zweiten Ausführungsform ist der Verriegelungsring auf dem Stecker (Gegenstück) angeordnet und wirkt mit zwei ringnutförmigen Aussparungen im Gehäuseteil (Mutterstück) zusammen. Die jeweils zwei mit dem Verriegelungsring zusammenwirkenden Aussparungen führen zu einer herstellungsmäßig recht aufwendigen Kontur, zumal zum Überführen von der Vorrastung in die Vollrastung jeweils die eine, erste Aussparung eine "schräge Führungsoberfläche" aufweisen muß. Außerdem treten bei Drahtsprengringen Nachteile bezüglich der Steckkräfte sowie Zentrierungsprobleme auf.

Der vorliegenden Erfindung liegt die Aufgabe zugrunde, eine gattungsgemäße Steckkupplung zu schaffen, die bei konstruktiv einfacher und herstellungsmäßig kostengünstiger Ausgestaltung verbesserte Steck- und Arretierungseigenschaften aufweist.

Erfindungsgemäß wird dies dadurch erreicht, daß das Halteelement als radialelastische Halteringklammer ausgebildet ist, die derart aus einem radialelastischen Ringkörper und an dem Ringkörper angeordneten Vorrastmitteln besteht, daß die Raststufe in der Vorraststellung mit den Vorrastmitteln und in der Vollraststellung mit dem Ringkörper zusammenwirkt.

Erfindungsgemäß sind somit lediglich ein (einziges) Halteelement und eine (einzige) zusammenwirkende Raststufe vorgesehen, wobei durch eine spezielle Ausgestaltung des Halteelementes dieses sowohl die Vorraststellung als auch die Vollraststellung gewährleistet. Damit vereinfacht sich die erfindungsgemäße Steckkupplung gegenüber dem Stand der Technik erheblich. Erfindungsgemäß besteht das Halteelement als Halteringklammer derart aus einem radialelastischen Ringkörper und an dem Ringkörper angeordneten Vorrastmitteln, daß die Raststufe in der Vorraststellung zunächst nur mit den Vorrastmitteln und in der Vollraststellung mit dem ganzen Ringkörper zusammenwirkt. Trotz der Vorrastmittel kann dennoch die erfindungsgemäße Halteringklammer sehr einfach und preiswert hergestellt werden, und zwar insbesondere als einstückiges Formteil aus Kunststoff. Dabei lassen sich durch eine spezielle formmäßige Ausgestaltung, die im folgenden noch genauer erläutert werden wird, auf einfache Weise auch besonders günstige Rast- bzw. Arretiereigenschaften erreichen.

In weiteren Unteransprüchen sowie auch in der nachfolgenden Beschreibung sind noch weitere vorteilhafte Ausgestaltungsmerkmale der Erfindung enthalten.

Anhand von in der Zeichnung dargestellten Ausführungsbeispielen und bestimmten Ausführungsvarianten soll im folgenden die Erfindung näher erläutert werden. Dabei zeigen:
- Fig. 1: einen Halb-Axialschnitt durch eine erfindungsgemäße Steckkupplung in einer ersten Ausführungsform in einem Zustand bei beginnendem Einstecken,
- Fig. 2: einen Halb-Axialschnitt durch die erfindungsgemäße Steckkupplung in der ersten Ausführungsform gemäß Fig. 1 in der Vorraststellung,
- Fig. 3: eine Ansicht analog zu Fig. 1 und 2 der ersten Ausführungsform der Steckkupplung in der Vollraststellung,
- Fig. 4: einen Halb-Axialschnitt einer erfindungsgemäßen Steckkupplung in einer zweiten Ausführungsform in einem Zustand beim beginnenden Einstecken,
- Fig. 5: eine Ansicht analog zu Fig. 4 in der Vorraststellung,
- Fig. 6: eine Ansicht analog zu Fig. 4 und 5 in der Vollraststellung.

In den verschiedenen Figuren der Zeichnung sind gleiche Teile stets mit den gleichen Bezugszeichen versehen und werden daher in der Regel auch jeweils nur einmal beschrieben.

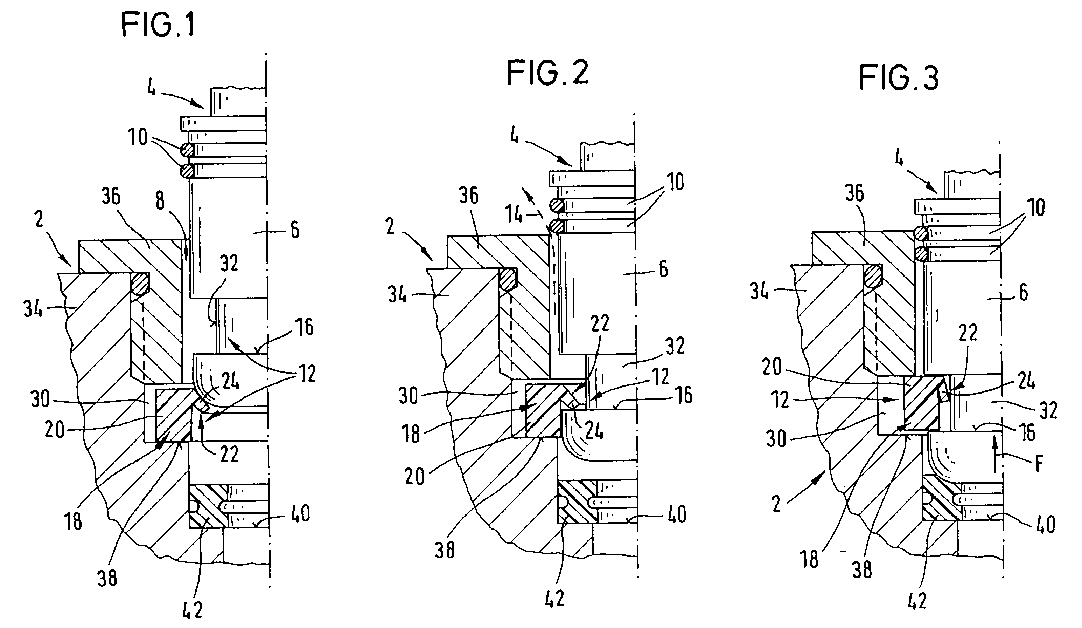

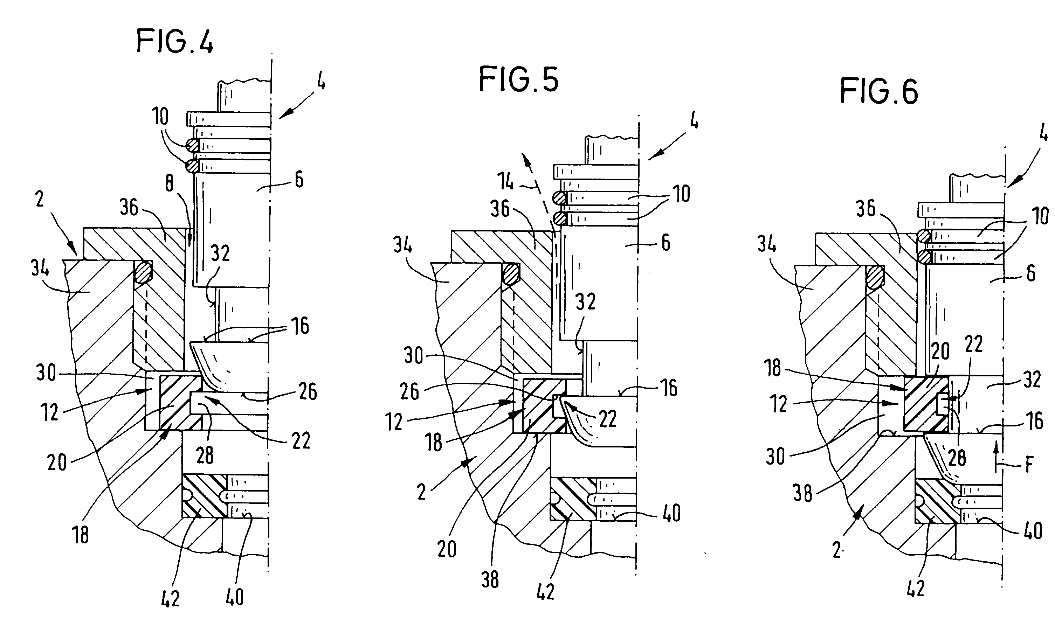

Wie sich einerseits aus den Fig. 1 bis 3 sowie andererseits aus den Fig. 4 bis 6 ergibt, besteht eine erfindungsgemäße Steckkupplung aus einem Gehäuseteil 2 und einem Steckerteil 4. Das Steckerteil 4 ist mit einem Steckerschaft 6 in eine Aufnahmeöffnung 8 des Gehäuseteils 2 einsteckbar und hierbei über mindestens eine Umfangsdichtung 10 - in den dargestellten Ausführungsbeispielen sind jeweils zwei Umfangsdichtungen 10 vorgesehen - gegen die Aufnahmeöffnung 8 abgedichtet sowie über eine Verriegelungseinrichtung 12 gegen Lösen arretierbar. Die Verriegelungseinrichtung 12 ist derart ausgebildet, daß einerseits eine teilgesteckte Vorraststellung (Fig.2; Fig.4) und andererseits eine ganz gesteckte Vollraststellung (Fig.3; Fig.6) gewährleistet sind. In der bereits gegen Lösen arretierten Vorraststellung liegt eine derart unvollständige Abdichtung vor, daß im Falle einer Druckbeaufschlagung mit einem Druckmedium, insbesondere Druckluft, ein akustisch wahrnehmbares Leckgeräusch erzeugt wird. Es handelt sich hierbei um eine definiert begrenzte Undichtigkeit bzw. eine durch die Anordnung der Umfangsdichtung(en) 10 relativ zum Gehäuseteil 2 bewirkte Bildung eines "Drosselspaltes", wodurch das Druckmedium entsprechend der gestrichelten Pfeile 14 dosiert ausströmt und dabei das Leckgeräusch insbesondere als Pfeifen, Zischen oder dergleichen, erzeugt. Dies kann dann als Signal dafür gewertet werden, daß noch nicht die korrekt gesteckte Vollraststellung erreicht ist, so daß in diesem Fall ausgehend von der Vorraststellung die Steckkupplung durch weitergehendes Stecken in die Vollraststellung überführt werden kann.

Erfindungsgemäß besteht nun die Verriegelungseinrichtung 12 einerseits aus (nur) einer Raststufe 16 des einen Kupplungsteils - in den dargestellten Ausführungsbeispielen des Steckerteils 4 - und andererseits aus (nur) einem elastischen, sowohl in der Vorraststellung (Fig.2,5) als auch in der Vollraststellung (Fig.3,6) mit der Raststufe 16 rastend zusammenwirkenden Halteelement auf der Seite des anderen Kupplungsteils - in den dargestellten Beispielen des Gehäuseteils 2. Bevorzugt handelt es sich bei dem Halteelement um eine geschlitzte, radialelastische Halteringklammer 18. Das erfindungsgemäße Halteelement bzw. Halteringklammer 18 hat somit eine Doppelfunktion, wozu es bzw. sie bevorzugt derart aus einem radialelastischen Ringkörper 20 und an dem Ringkörper 20 angeordneten Vorrastmitteln 22 besteht, daß die Raststufe 16 in der Vorraststellung (siehe Fig. 2 und 5) zunächst nur mit den Vorrastmitteln 22 und in der Vollraststellung (s. Fig. 3 und 6) dann mit dem ganzen Ringkörper 20 zusammenwirkt.

Im Falle der Ausführung nach Fig. 1 bis 3 ist vorgesehen, daß die Vorrastmittel 22 aus mindestens einem relativ zu dem Ringkörper 20 in radialer Richtung federelastisch beweglichen Vorrastelement 24 bestehen. Vorzugsweise besitzt die Halteringklammer aber mehrere über den Umfang des Ringkörpers 20 verteilt angeordnete Vorrastelemente 24. Im dargestellten Ausführungsbeispiel nach Fig. 1 bis 3 ist jedes Vorrastelement 24 als einstückig mit dem Ringkörper 20 verbundene, federelastische Rastzunge ausgebildet, die in der Vorraststellung (Fig. 2) mit ihrem freien Ende die Raststufe 16 zur Arretierung des Steckerteils 4 hintergreift. Diese als Rastzungen ausgebildeten Vorrastelemente wirken somit nach Art von "Widerhaken". Nach weitergehendem Einstecken des Steckerschaftes 6 in die Aufnahmeöffnung 8 rastet dann die Halteringklammer 18 mit der ganzen axialen Länge bzw. Dicke des Ringkörpers 20 die Raststufe 16 hintergreifend radial nach innen ein, wobei - siehe Fig. 3 - die Vorrastelemente 24 entsprechend verformt werden.

Anstatt von elastischen Rastzungen könnten als Vorrastelemente 24 alternativ auch federelastisch am Ringkörper 20 abgestützte, in radialer Richtung "riegelartige" Elemente vorgesehen sein (nicht dargestellt).

Bei der Ausführungsform nach Fig. 4 bis 6 bestehen die Vorrastmittel 22 aus einer an dem Ringkörper 20 gebildeten, radialen Stufenfläche 26 derart, daß in der Vorraststellung (Fig. 5) durch radialelastische Verformung bzw. Bewegung des Ringkörpers 20 selbst zunächst nur die Stufenfläche 26 rastend mit der Raststufe 16 zusammenwirkt. Wie dargestellt ist bevorzugt die Stufenfläche 26 durch eine radiale Ringnut 28, d.h. eine sogenannte "Fangnut", gebildet; es wäre aber auch eine einfache radiale Stufenfläche durch einen L-förmigen Ringquerschnitt der Halteringklammer 18 bzw. des Ringkörpers 20 ausreichend. Bei dieser Ausführungsform wird beim Einstecken des Steckerschaftes 6 die Halteringklammer 18 bzw. der Ringkörper 20 insgesamt in radialer Richtung elastisch verformt, bis zunächst die Stufenfläche 26 rastend mit der Raststufe 16 zusammenwirkt. Wird dann ausgehend von dieser in Fig. 5 dargestellten Vorraststellung der Steckerschaft weitergehend eingesteckt, so greift dann die gesamte Halteringklammer 18 bzw. der Ringkörper 20 mit seiner gesamten axialen Länge bzw. Dicke hinter die Raststufe 16 (Fig. 6).

In den dargestellten Ausführungsbeispielen ist - wie oben bereits erwähnt - das Halteelement bzw. die Halteringklammer 18 innerhalb des Gehäuseteils gelagert, und zwar insbesondere in einer Innenringnut 30. Dabei ist dann die Raststufe 16 - insbesondere als Begrenzungsfläche einer Außenringnut 32 - an dem Steckerschaft 6 gebildet. Alternativ hierzu ist dies aber durchaus auch umgekehrt möglich, d.h. das Halteelement bzw. die Halteringklammer 18 kann an dem Steckerschaft 6, insbesondere in einer Außenringnut, gelagert sein, während die Raststufe 16 - insbesondere als Begrenzungsfläche einer Innenringnut - innerhalb der Aufnahmeöffnung 8 des Gehäuseteils 2 gebildet ist.

In beiden erfindungsgemäßen Ausführungsvarianten ist es vorteilhaft, wenn das Gehäuseteil 2 aus zwei lösbar miteinander verbundenen Teilen besteht, und zwar aus einem Basisteil 34 und einem in eine Öffnung des Basisteils 34 eingesetzten Einsatzteil 36. Vorzugsweise sind diese beiden Teile 34, 36 über eine Gewindeverbindung verbunden, indem das Einsatzteil 36 als Einschraubteil mit einem Außengewinde in ein Innengewinde des Basisteils 34 eingeschraubt bzw. einschraubbar ist. Es kann aber auch eine andere Verbindungsart, beispielsweise eine Bajonettverbindung und/oder eine arretierbare Rastverbindung (schnappbare Form- oder Kraftformschlußverbindung) vorgesehen sein. Das Einsatzteil 36 ist im wesentlichen hohlzylindrisch ausgebildet. Aufgrund der bevorzugt vorgesehenen Zweiteiligkeit des Gehäuseteils 2 ist ein Lösen der Verbindung nach dem Einstecken möglich, indem das Einsatzteil 36 vom Basisteil 34 gelöst und dann zusammen mit dem Steckerteil 4 und dem Halteelement bzw. der Halteringklammer 18 entnommen wird.

Für die dargestellten Ausführungen ist es zudem vorteilhaft, wenn axial zwischen dem Einsatzteil 36 und einer gegenüberliegenden Stufenfläche 38 des Basisteils 34 die Innenringnut 30 gebildet ist, die dabei zur lagernden Aufnahme des Halteelementes bzw. der Halteringklammer 18 dient. Aber auch für die alternative, nicht dargestellte Ausführungsform mit steckerteilseitig gelagertem Halteelement kann dieses Ausgestaltungsmerkmal ebenfalls vorgesehen sein, wobei dann das (einzige) Halteelement 18 rastend in die Innenringnut 30 eingreift, d.h. die Raststufe 16 hintergreift. Obwohl hierbei somit das Gehäuseteil 2 die Innenringnut 30 aufweist, ist die Kontur der Aufnahmeöffnung 8 dennoch sehr einfach herstellbar, und zwar wegen der Zweiteiligkeit des Gehäuseteils 2 aus Basisteil 34 und Einsatzteil 36. Ferner wird durch diese Zweiteiligkeit im Falle der dargestellten Ausführungen die Montage des Halteelementes 18 im Gehäuseteil 2 vereinfacht.

Bevorzugt ist die Halteringklammer 18 als Formteil aus Kunststoff gebildet und weist einen den Ringumfang unterbrechenden Schlitzbereich auf, wodurch sie radialelastisch spreizbar bzw. verengbar ist (in der Zeichnung nicht erkennbar). Es ist besonders vorteilhaft, wenn die bzw. jede Halteringklammer 18 bzw. der Ringkörper 20 einen - abgesehen von den Vorrastmitteln 22 - im wesentlichen rechteckigen Ringquerschnitt aufweist (bezogen auf die Schnittebene in axialer bzw. radialer Richtung; vgl. die Zeichnungsfiguren). Diese Ausführung ist für die Arretierungseigenschaften (Rastverhalten, Haltekräfte) vorteilhaft.

In einer weiteren, in der Zeichnung nicht zu erkennenden Ausgestaltung der Erfindung ist die Halteringklammer 18 durch mindestens Dreipunktanlage (mindestens drei über den Umfang verteilte Anlagepunkte) zur Gehäuseteil-Aufnahmeöffnung 8 (bzw. zum Steckerschaft 6) bezüglich der Steckachse zentriert gehalten. Diese Anlagepunkte können beispielsweise im etwa mittigen Ringbereich dem Schlitz gegenüberliegend einerseits und im Bereich der dem Schlitz benachbarten freien Ringenden andererseits angeordnet sein. In den dann jeweils dazwischenliegenden Bereichen ist die Radialelastizität gewährleistet.

Gemäß einer weiteren vorteilhaften Ausgestaltung der Erfindung ist innerhalb der Aufnahmeöffnung 8 auf einer weiteren Stufenfläche 40 ein bevorzugt als gummielastisches Pufferelement ausgebildetes Federelement 42 derart angeordnet, daß in der Vollraststellung (Fig. 3,6) das Steckerteil 4 durch Anlage des Steckerschaftes 6 an dem Federelement 42 mit einer axial entgegen der Einsteckrichtung wirkenden Kraft F beaufschlagt wird, so daß die Halteringklammer 18 trotz eines (eventuell) vorhandenen Axialspiels in Anlage an der Raststufe 16 und der "gegenüberliegenden" Anlagefläche (wie dargestellt an der Begrenzungsfläche der Innenringnut 30) gehalten wird.

## Patentansprüche

1. Steckkupplung für Druckmittelsysteme, bestehend aus zwei Kupplungsteilen, und zwar einem Gehäuseteil (2) und einem Steckerteil (4), wobei das Steckerteil (4) mit einem Steckerschaft (6) über mindestens eine Umfangsdichtung (10) abgedichtet in eine Aufnahmeöffnung (8) des Gehäuseteils (2) einsteckbar und über eine Verriegelungseinrichtung (12) gegen Lösen arretierbar ist, wobei die Verriegelungseinrichtung (12) derart ausgebildet ist,daß eine teilgesteckte Vorraststellung und eine ganz gesteckte Vollraststellung gewährleistet sind, wobei in der Vorraststellung eine derart unvollständige Abdichtung vorliegt, daß im Falle einer Druckbeaufschlagung mit einem Druckmedium ein Signal, insbesondere ein akustisch wahrnehmbares Leckgeräusch erzeugt wird, und wobei in der Vollraststellung eine vollständige, druckdichte Abdichtung vorliegt, wobei die Verriegelungseinrichtung (12) einerseits aus einer radialen Raststufe (16) des einen Kupplungsteils und andererseits aus einem elastisch verformbaren, sowohl in der Vorraststellung als auch in der Vollraststellung mit der Raststufe (16) rastend zusammenwirkenden Halteelement (18) auf der Seite des anderen Kupplungsteils besteht,
**dadurch gekennzeichnet**, daß das Halteelement als radialelastische Halteringklammer (18) ausgebildet ist, die derart aus einem radialelastischen Ringkörper (20) und an dem Ringkörper (20) angeordneten Vorrastmitteln (22) besteht, daß die Raststufe (16) in der Vorraststellung mit den Vorrastmitteln (22) und in der Vollraststellung mit dem Ringkörper (20) zusammenwirkt.

2. Steckkupplung nach Anspruch 1,
**dadurch gekennzeichnet**, daß die Vorrastmittel (22) aus mindestens einem relativ zu dem Ringkörper (20) in radialer Richtung federelastisch beweglichen Vorrastelement (24) bestehen.

3. Steckkupplung nach Anspruch 2,
**dadurch gekennzeichnet**, daß das Vorrastelement (24) - bzw. jedes von vorzugsweise mehreren über den Umfang des Ringkörpers (20) verteilten Vorrastelementen (24) - als einstückig mit dem Ringkörper (20) verbundene, elastische Rastzunge ausgebildet ist, die in der Vorraststellung mit ihrem freien Ende die Raststufe (16) zur Arretierung des Steckerteils (4) hintergreift.

4. Steckkupplung nach Anspruch 1,
**dadurch gekennzeichnet**, daß die Vorrastmittel (22) aus einer an dem Ringkörper (20) gebildeten, radialen Stufenfläche (26) derart bestehen, daß in der Vorraststellung durch radialelastische Bewegung des Ringkörpers (20) die Stufenfläche (26) mit der Raststufe (16) zusammenwirkt.

5. Steckkupplung nach einem oder mehreren der Ansprüche 1 bis 4,
**dadurch gekennzeichnet**, daß das Halteelement bzw. die Halteringklammer (18) innerhalb des Gehäuseteils (2) -insbesondere in einer Innenringnut (30) - gelagert ist, während die Raststufe (16)-insbesondere durch eine Außenringnut (32) an dem Steckerschaft (6) gebildet ist.

6. Steckkupplung nach einem oder mehreren der Ansprüche 1 bis 4,
**dadurch gekennzeichnet**, daß das Halteelement bzw. die Halteringklammer (18) an dem Steckerschaft (6) - insbesondere in einer Außenringnut - gelagert ist, während die Raststufe (16) - insbesondere durch eine Innenringnut - innerhalb der Aufnahmeöffnung (8) des Gehäuseteils (2) gebildet ist.

7. Steckkupplung nach einem oder mehreren der Ansprüche 1 bis 6,
**dadurch gekennzeichnet**, daß das Halteelement bzw. die Halteringklammer (18) als einstückiges Kunststoff-Formteil ausgebildet ist.

8. Steckkupplung nach einem oder mehreren der Ansprüche 1 bis 7,
**dadurch gekennzeichnet**, daß das Halteelement bzw. die Halteringklammer (18) einen im wesentlichen rechteckigen Ringquerschnitt aufweist.

9. Steckkupplung nach einem oder mehreren der Ansprüche 1 bis 8,
**dadurch gekennzeichnet**, daß das Halteelement bzw. die Halteringklammer (18) durch zumindest Dreipunktanlage bezüglich der Steckachse zentriert ist.

10. Steckkupplung nach einem oder mehreren der Ansprüche 1 bis 9
**dadurch gekennzeichnet**, daß das Gehäuseteil (2) aus zwei lösbar miteinander verbundenen Teilen besteht, und zwar aus einem Basisteil (34) und einem in eine Öffnung des Basisteils (34) eingesetzten Einsatzteil (36), wobei das im wesentlichen hohlzylindrische Einsatzteil (36) mit seiner in das Basisteil (34) weisenden Stirnflächen eine die Halteringklammer (18) aufnehmende Innenringnut (30) begrenzt oder die mit der Halteringklammer (18) zusammenwirkende Raststufe (16) bildet.

## Claims

1. Plug-in coupling for pressure-medium systems, comprising two coupling parts, to be precise a housing part (2) and a plug part (4), it being the case that the plug part (4) can be plugged, by way of a plug shank (6), into a receiving opening (8) of the housing part (2), so as to be sealed via at least one circumferential seal (10), and can be arrested against release via a locking device (12), it being the case that the locking device (12) is designed such that a partially plugged-in, preliminary latching position and a fully plugged-in, fully latched position are ensured, it being the case that, in the preliminary latching position, sealing is incomplete to the extent that, in the case of being subjected to the action of pressure by a pressure medium, a signal, in particular an audible leakage noise, is produced, and it being the case that, in the fully latched position, complete, pressure-tight sealing is provided, it being the case that the locking device (12) comprises, on the one hand, a radial latching step (16) of one coupling part and, on the other hand, an elastically deformable retaining element (18) on the side of the other coupling part, said retaining element interacting with the latching step (16) with latching action both in the preliminary latching position and in the fully latched position, characterized in that the retaining element is designed as a radially elastic retaining ring clamp (18) which comprises a radially elastic ring element (20) and preliminary latching means (22), arranged on the ring element (20), such that the latching step (16) interacts with the preliminary latching means (22) in the preliminary latching position and with the ring element (20) in the fully latched position.

2. Plug-in coupling according to Claim 1, characterized in that the preliminary latching means (22) comprise at least one preliminary latching element (24) which can be moved in a resiliently elastic manner in the radial direction relative to the ring element (20).

3. Plug-in coupling according to Claim 2, characterized in that the preliminary latching element (24) - or each of preferably a plurality of preliminary latching elements (24) distributed over the circumference of the ring element (20) - is designed as an elastic latching tongue which is connected integrally to the ring element (20) and, in the preliminary latching position, engages behind the latching step (16) by way of its free end for the purpose of arresting the plug part (4).

4. Plug-in coupling according to Claim 1, characterized in that the preliminary latching means (22) comprise a radial step surface (26), formed on the ring element (20), such that, in the preliminary latching position, the step surface (26) interacts with the latching step (16) by radially elastic movement of the ring element (20).

5. Plug-in coupling according to one or more of Claims 1 to 4, characterized in that the retaining element or the retaining ring clamp (18) is mounted within the housing part (2) - in particular in an inner annular groove (30) - while the latching step (16) is formed - in particular by an outer annular groove (32) - on the plug shank (6).

6. Plug-in coupling according to one or more of Claims 1 to 4, characterized in that the retaining element or the retaining ring clamp (18) is mounted on the plug shank (6) - in particular in an outer annular groove - while the latching step (16) is formed - in particular by an inner annular groove - within the receiving opening (8) of the housing part (2).

7. Plug-in coupling according to one or more of Claims 1 to 6, characterized in that the retaining element or the retaining ring clamp (18) is designed as a single-piece plastic moulding.

8. Plug-in coupling according to one or more of Claims 1 to 7, characterized in that the retaining element or the retaining ring clamp (18) has an essentially rectangular ring cross section.

9. Plug-in coupling according to one or more of Claims 1 to 8, characterized in that the retaining element or the retaining ring clamp (18) is centred by at least three-point abutment in relation to the plug-in axis.

10. Plug-in coupling according to one or more of Claims 1 to 9, characterized in that the housing part (2) comprises two parts which are connected to one another in a releasable manner, to be precise a base part (34) and an insert part (36) inserted into an opening of the base part (34), it being the case that the essentially hollow-cylindrical insert part (36), by way of its end surfaces which are oriented into the base part (34), bounds an inner annular groove (30) which receives the retaining ring clamp (18) or forms the latching step (16) which interacts with the retaining ring clamp (18).

## Revendications

1. Raccord à emmanchement pour circuits de fluide sous pression, composé de deux parties de raccord, plus précisément d'une partie boîtier (2) et d'une partie mâle (4), dans lequel la partie mâle (4) peut être emmanchée par un fût (6) de partie mâle dans une ouverture réceptrice (8) de la partie boîtier (2) et enfermée à joint étanche par au moins une garniture d'étanchéité périphérique (10) et peut être retenue à l'encontre de la séparation par un dispositif de verrouillage (12), le dispositif de verrouillage (12) étant d'une configuration qui garantit une position de pré-enclenchement partiellement emmanchée et une position d'enclenchement complet entièrement emmanchée, une étanchéité suffisamment incomplète étant présente dans la position de pré-enclenchement pour que, dans le cas d'une sollicitation de pression avec un fluide de pression, un signal, en particulier un bruit de fuite perceptible acoustiquement soit produit, tandis que, dans la position d'enclenchement complet, une étanchéité entièrement étanche à la pression est obtenue, le dispositif de verrouillage (12) étant composé, d'une part, d'un épaulement d'enclenchement radial (16) de l'une des parties du raccord et, d'autre part, sur le côté de l'autre partie du raccord, d'un élément de retenue (18) qui coopère par enclenchement avec l'épaulement d'enclenchement (16) aussi bien dans la position de pré-enclenchement que dans la position d'enclenchement complet,
caractérisé en ce que l'élément de retenue est constitué par une agrafe annulaire de retenue (18) élastique dans la direction radiale, qui est elle-même composée d'un corps annulaire (20) élastique dans la direction radiale et de moyens de pré-enclenchement (22) disposés sur le corps annulaire (20), de telle manière que l'épaulement d'enclenchement (16) coopère avec les moyens de pré-enclenchement (22) dans la position de pré-enclenchement et avec le corps annulaire (20) dans la position d'enclenchement complet.

2. Raccord à emmanchement selon la revendication 1,
caractérisé en ce que les moyens de pré-enclenchement (22) sont composés d'au moins un élément de pré-enclenchement (24) mobile avec une élasticité de ressort dans la direction radiale par rapport au corps annulaire (20).

3. Raccord à emmanchement selon la revendication 2,
caractérisé en ce que l'élément de pré-enclenchement (24) - ou chacun des de préférence plusieurs éléments de pré-enclenchement (24), répartis sur la périphérie du corps annulaire (20) - est constitué par une languette d'enclenchement élastique, faite d'une seule pièce avec le corps annulaire (20), qui s'accroche derrière l'épaulement d'enclenchement (16) par son extrémité libre dans la position de pré-enclenchement pour arrêter la partie mâle (4).

4. Raccord à emmanchement selon la revendication 1,
caractérisé en ce que les moyens de pré-enclenchement (22) sont composés d'une surface d'épaulement radiale (26) formée sur le corps annulaire (20) de telle manière que, dans la position de pré-enclenchement, la surface d'épaulement (26) coopère avec l'épaulement d'enclenchement (16) sous l'effet d'un mouvement radial élastique du corps annulaire (20).

5. Raccord à emmanchement selon une ou plusieurs des revendications 1 à 4,
caractérisé en ce que l'élément de retenue ou l'agrafe annulaire de retenue (18) est monté à l'intérieur de la partie boîtier (2) - en particulier dans une gorge annulaire intérieure (30) - tandis que l'épaulement d'enclenchement (16) est en particulier formé par une gorge annulaire extérieure (32) prévue sur le fût (6) de la partie mâle.

6. Raccord à emmanchement selon une ou plusieurs des revendications 1 à 4,
caractérisé en ce que l'élément de retenue ou l'agrafe annulaire de retenue (18) est monté sur le fût (6) de la partie mâle - en particulier dans une gorge annulaire extérieure - tandis que l'épaulement d'enclenchement (16) est formé - en particulier par une gorge annulaire intérieure - à l'intérieur de l'ouverture réceptrice (8) de la partie boîtier (2).

7. Raccord à emmanchement selon une ou plusieurs des revendications 1 à 6,
caractérisé en ce que l'élément de retenue ou l'agrafe annulaire de retenue (18) est constitué par une pièce moulée en matière plastique d'un seul tenant.

8. Raccord à emmanchement selon une ou plusieurs des revendications 1 à 7,
caractérisé en ce que l'élément de retenue ou l'agrafe annulaire de retenue (18) présente une section d'anneau sensiblement rectangulaire.

9. Raccord à emmanchement selon une ou plusieurs des revendications 1 à 8, caractérisé en ce que l'élément de retenue ou l'agrafe annulaire de retenue (18) est centré par rapport à l'axe d'emmanchement par un appui en au moins trois points.

10. Raccord à emmanchement selon une ou plusieurs des revendications 1 à 9, caractérisé en ce que la partie boîtier (2) est composée de deux parties reliées l'une à l'autre de façon séparable, plus précisément d'une partie de base (34) et d'une partie rapportée (36) insérée dans une ouverture de la partie de base (34), la partie rapportée (36) sensiblement cylindrique creuse délimitant par sa surface frontale qui plonge dans la partie de base (34) une gorge annulaire intérieure (30) qui reçoit l'agrafe annulaire de retenue (18), ou formant par cette surface l'épaulement d'enclenchement (16) qui coopère avec l'agrafe annulaire de retenue (18).
